(19) Europäisches Patentamt
European Patent Office
Office européen des brevets

(11) **EP 3 958 526 B1**

(12) **EUROPEAN PATENT SPECIFICATION**

(45) Date of publication and mention
of the grant of the patent:
**21.02.2024 Bulletin 2024/08**

(21) Application number: **21189539.6**

(22) Date of filing: **04.08.2021**

(51) International Patent Classification (IPC):
*H04L 25/03* *(2006.01)*      *G06N 3/02* *(2006.01)*

(52) Cooperative Patent Classification (CPC):
**H04L 25/03165; H04L 25/03305;** G06N 3/02;
G06N 20/10; G06N 20/20; H04L 25/03821;
H04L 2025/03414

(54) **METHOD AND APPARATUS FOR RECEIVING DATA**

VERFAHREN UND VORRICHTUNG ZUM EMPFANGEN VON DATEN

PROCÉDÉ ET DISPOSITIF DE RÉCEPTION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.08.2020 FI 20205802**

(43) Date of publication of application:
**23.02.2022 Bulletin 2022/08**

(73) Proprietor: **Nokia Technologies Oy
02610 Espoo (FI)**

(72) Inventors:
• **BARBU, Oana-Elena
9000 Aalborg (DK)**
• **KOVÁCS, István Zsolt
9000 Aalborg (DK)**
• **HADI, Muhammad Usman
9220 Aalborg (DK)**

(74) Representative: **Nokia EPO representatives
Nokia Technologies Oy
Karakaari 7
02610 Espoo (FI)**

(56) References cited:
**CN-A- 109 246 038**

• **TAOTAO WANG ET AL: "Deep Learning for Joint
MIMO Detection and Channel Decoding",
ARXIV.ORG, CORNELL UNIVERSITY LIBRARY,
201 OLIN LIBRARY CORNELL UNIVERSITY
ITHACA, NY 14853, 17 January 2019 (2019-01-17),
XP081003476,**
• **LIANG FEI ET AL: "Towards Optimal Power
Control via Ensembling Deep Neural Networks",
IEEE TRANSACTIONS ON COMMUNICATIONS,
IEEE SERVICE CENTER, PISCATAWAY, NJ. USA,
vol. 68, no. 3, 4 December 2019 (2019-12-04),
pages 1760-1776, XP011779472, ISSN: 0090-6778,
DOI: 10.1109/TCOMM.2019.2957482 [retrieved on
2020-03-16]**

**Description**

TECHNICAL FIELD

The present disclosure relates to a system and method for receiving data over a communication channel in a communications network.

BACKGROUND

In recent years machine learning techniques have found increasing application within the context of communications networks. Initially this included application of machine learning techniques to radio network management, fault detection, failure monitoring and intrusion detection.

More recently, there has been growing interest in how to apply machine learning to perform functions in the Radio Access Network (RAN) including channel encoding and decoding, channel estimation and prediction, resource allocation and scheduling and mobility optimisation. Patent publication CN 109 246038 A discloses a data model dual-drive GFDM receiver and method. Taotao Wang et al. describes "Deep Learning for Joint MIMO Detection and Channel Decoding", Cornell University Library, 201 Olin Library Cornell University Ithaca, NY I4853, 17 January 2019.

SUMMARY

It is an object of the invention to provide a method for receiving data over a communication channel. The foregoing and other objects are achieved by the features of the independent claims. Further implementation forms are apparent from the dependent claims, the description and the figures.

BRIEF DESCRIPTION OF THE DRAWINGS

For a more complete understanding of the present disclosure, and the advantages thereof, reference is now made to the following descriptions taken in conjunction with the accompanying drawings, in which:

Figure 1 shows a schematic diagram of an apparatus for receiving data over a communication channel, according to an example.
Figure 2 is a schematic diagram showing an apparatus for receiving data over a communication channel, according to an example.
Figure3 is a schematic diagram showing a neural network, according to an example.
Figure 4 is a schematic diagram showing a denoising apparatus, according to an example.
Figure 5 is a flow diagram showing a method for receiving data, according to an example.
Figure 6 is a flow diagram showing a method for determining an interference condition, according to an example.

DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Machine learning (ML) techniques are increasingly widely deployed in communications networks. In recent years there has been growing interest in how to apply machine learning to perform functions in the Radio Access Network (RAN). This includes functions in the Physical Layer (PHY) and Media Access Control (MAC) Layer as well as Radio Resource Management (RRM). In particular, ML has been applied to channel encoding and decoding, channel estimation and prediction, resource allocation and scheduling and mobility optimisation.

A motivation of application of ML in these scenarios is to replace traditional rule-based techniques with ML-based techniques in order to achieve system gains either in terms of radio capacity via increased spectral efficiency or signalling reduction, reliability, or complexity reduction.

Most proposed applications of ML, especially more complex artificial intelligence (AI) systems, focus on running training and inference within the network side. This is because it is generally assumed that there is much greater computational power on the network side. For example, these systems may run in host entities within the RAN or Core Network (CN) functions. Furthermore, on the network side, there is a greater abundance of input data for training purposes. This input data is also assumed to be under the control of the service provider.

Today, machine learning is implemented in practically all smart-phones for non-radio access purposes across a wide variety of tasks such as keyboard function optimisation and voice recognition. The methods and systems described herein implement machine learning techniques to perform RAN functions such as denoising.

Interference in Fifth Generation (5G) cellular networks acts as a limiting factor on performance. Co-channel interference occurs where the same resources are used for terminals which are close to each other, but served by different nodes. Self-interference may occur due to long delay spreads - channels with delay spreads longer than the cyclic prefix cause inter-symbol and inter-carrier interference. Self-interference may also occur due to high Doppler shifts. As carrier frequencies increase, the Doppler shift may destroy the orthogonality of subcarriers, introducing inter-carrier interference.

Receiver performance may suffer significant degradation due to interference. Classical receivers implement a simple form of interference rejection which provides a limited performance improvement in such conditions.

The methods and systems described herein may be implemented in a receiver in a communications network to perform equalization and demodulation under different interference conditions. A denoising module implements an inference model based on machine learning techniques. The denoising module adapts its operation to the specific interference conditions it finds itself in. Specifically, in one implementation the denoising module is adapted to deal with co-channel interference conditions. In a second implementation the denoising module is adapted to deal with self-interference conditions.

The receiver may detect the interference type by implementing a classifier such as a decision forest or neural networks. In this case, the receiver may use dedicated pilot-dense symbols in one or several slots to classify the interference type. In another instance the receiver may instead (or in addition) be informed of the interference conditions by the serving cell. In other words, the receiver uses a trigger, either locally generated, or signalled by the network, to switch between co-channel and self-interference.

In the case where the receiver identifies the interference condition, the UE may act fully independently of the network. In the case where the network indicates the interference condition to the UE, the network enables or triggers the activation of different ML functionalities on the UE side. The benefit of such an approach is that it moves interference classification tasks to the network side.

In addition to adapting to the interference conditions, the operation of the denoising module may vary according to the signal-to-noise (SNR) regime. In particular, the denoising module may implement a different operation mode for different SNR regimes corresponding to a differently trained architecture. The activation and deactivation of the operation mode may be implemented by a trigger that is generated by a channel estimator.

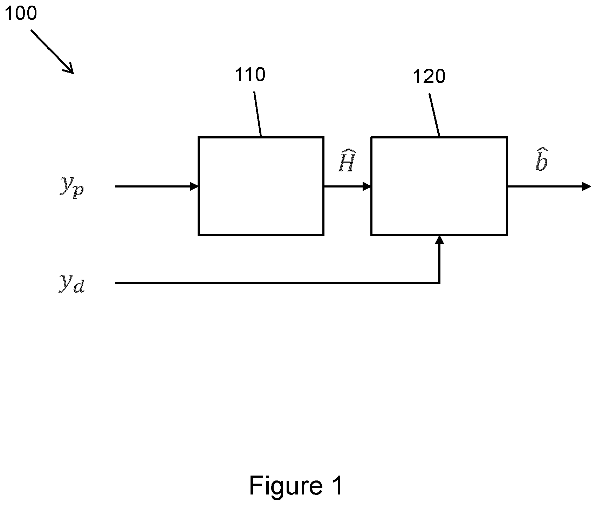

Figure 1 is a schematic diagram showing an apparatus 100 for receiving data over a communication channel, according to an example. The apparatus 100 shown in Figure 1 comprises a channel estimator 110 and a denoising module 120 communicatively coupled to the channel estimator I10.

In Figure 1, a vector of bits $u$ is encoded into $b$ and modulated into a vector of complex symbols $s=m(b)$ into a discreet modulation set using, for example, Orthogonal Frequency-Division Multiplexing (OFDM). The vector is used to generate an OFDM signal that is transmitted over the wireless channel with impulse response $h(t)$.

The apparatus 100 may comprise, for example, an OFDM demodulator (not shown in Figure 1). When the apparatus 100 receives the signal the demodulator performs OFDM demodulation on the received signal to generate a vector:

$$y = Hs + I + n \qquad (1)$$

In expression (1), $n$ may be, for example, additive white Gaussian noise (AWGN) with variance $\sigma^2$, $H$ is a channel frequency response diagonal matrix and $I$ is an unknown interfering signal. A carrier $k$ of signal $y$ is either a pilot

carrier if $k \in Set_{pilots}$, a set of pilot carrying wavelengths, or a data carrier if $k \in Set_{data}$, a set of data carrying wavelengths. The apparatus 100 may use pilot signals to generate an estimate of **H**, denoted $\hat{H}$.

A data vector received by apparatus 100 of length equal to the cardinality, $| Set_{data} |$ of $Set_{data}$ is given as:

$$\boldsymbol{y}_d = \boldsymbol{H}_d \boldsymbol{s}_d + \boldsymbol{I}_d + \boldsymbol{n}_d \quad (2)$$

This may be re-written as follows:

$$\boldsymbol{y}_d = \boldsymbol{H}_d \boldsymbol{s}_d + \boldsymbol{I}_d + \boldsymbol{n}_p = \boldsymbol{H}_d m(\boldsymbol{b}_d) + \boldsymbol{I}_d + \boldsymbol{n}_p = \eta(\boldsymbol{b}_d) \quad (3)$$

In expression (3), $\boldsymbol{b}_d$ is a data bit vector and m is a mapping function which maps the coded bits to a complex signal belonging to a discrete constellation of points using for example, Quadrature Phase Shift Keying (QPSK) or M-ary Quadrature Amplitude Modulation (QAM). The interference term has different properties if the source of the interference is co-channel interference or self-interference. Therefore the expression (3) may be rewritten as:

$$\boldsymbol{y}_d = \eta_1(\boldsymbol{b}_d) \quad \text{(co-channel interference)}$$

$$\boldsymbol{y}_d = \eta_2(\boldsymbol{b}_d) \quad \text{(self-interference)}.$$

In the apparatus 100, shown in Figure 1, the denoising module 120 is arranged to find a function $f_i$ that approximates the function $\eta_i^{-1}$, for $i = 1: 2$:

$$f_i = \arg \min_{f_i} < ||f_i(\boldsymbol{y}_d) - \boldsymbol{b}_d||_2^2 > \quad (4)$$

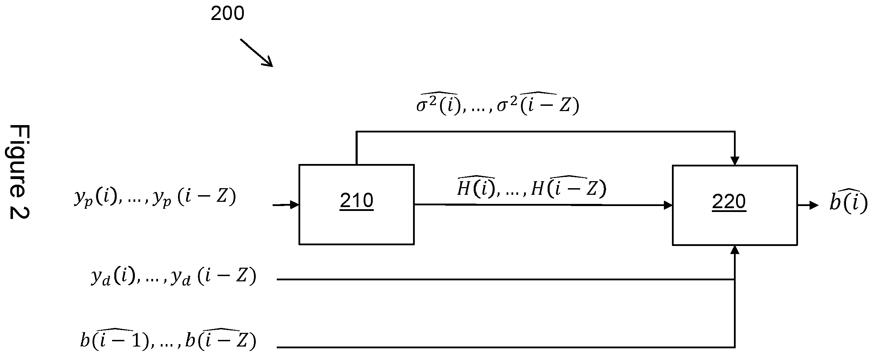

Figure 2 is a schematic diagram showing an apparatus 200 for receiving data over a communication channel, according to an example. The apparatus 200 shown in Figure 2 is similar to the apparatus 100 shown in Figure 1. In particular the apparatus 200 comprises a channel estimator 210 and a denoising module 220, communicatively coupled to the channel estimator 210.

In Figure 2, vectors $\boldsymbol{y}_d$ are indexed by, for example, the OFDM symbol number. That is, $\boldsymbol{y}_d(j)$ is the data vector corresponding to the $j$'th OFDM symbol in a received signal after demodulation. In both co-channel and self-interference settings several consecutive OFDM symbols may become corrupted. Therefore, according to examples described herein, the methods and systems process data in blocks. For example the denoising module 220 processes a block comprising the most recent Z OFDM symbols, for some integer value Z.

According to an example, the denoising module 220 accesses the most recent Z channel matrices from the channel estimator: $\hat{H}(j), j = i - Z + 1: i$ where $i$ is the index of the current symbol. The diagonal entries of the matrices $\hat{H}(j)$, are separated into real and imaginary parts:

$$\boldsymbol{x}_h = \left[ R\{\widehat{\boldsymbol{h}(j)}^T\}, I\{\widehat{\boldsymbol{h}(j)}^T\} \right]^T, \boldsymbol{h} = diag(\boldsymbol{H})$$

The denoising module 220 access the last Z OFDM symbols from the demodulator (not shown in Figure 2) and separates these into real and imaginary parts:

$$\boldsymbol{x}_y = \left[ R\{\boldsymbol{y}_d^T(j)\}, I\{\boldsymbol{y}_d^T(j)\} \right]^T, j = i - Z + 1: i.$$

In some cases, the denoising module 220 also collects noise variance estimates corresponding to the last Z OFDM symbols: $\boldsymbol{x}_\sigma = \left[ \widehat{\sigma^2}(j) \right]^T$. The noise variance estimates may be used for switching between different architectures that are tailored to different signal-to-noise regimes. The denoising module 220 outputs Z bit vectors:

$$o = \widehat{\boldsymbol{b}}_d(j), j = i - Z + 1 : i.$$

Measurements of these quantities are collected and used to train an inference model in either co-channel interference conditions, to solve expression (4) to find the function $f_1$, or in self-interference conditions to solve (4) to find the function $f_2$. The inference model may be a linear predictive function, a non-linear predictive function, a neural network, an autoencoder, an adversarial neural network, a gradient boosting machine, a random forest, a support vector machine, a nearest neighbour model, a Gaussian process, a Bayesian regression or an ensemble of one or more of these models.

According to examples described herein, the training phase of the inference model in either co-channel or self-interference conditions may be performed remotely in, for example, a "cloud" service. Alternatively, training may be performed at any device with transceiver capabilities such as a user device or other network edge device. In either case training is performed under known conditions, such that there is no ambiguity regarding the presence of either co-channel interference or self-interference in the training measurement set.

Once the inference model is trained it may be deployed on a device. Once the inference model is deployed on the device, the interference condition, which may be co-channel interference or self-interference, may be detected or signalled by the network, so that the correct model is activated.

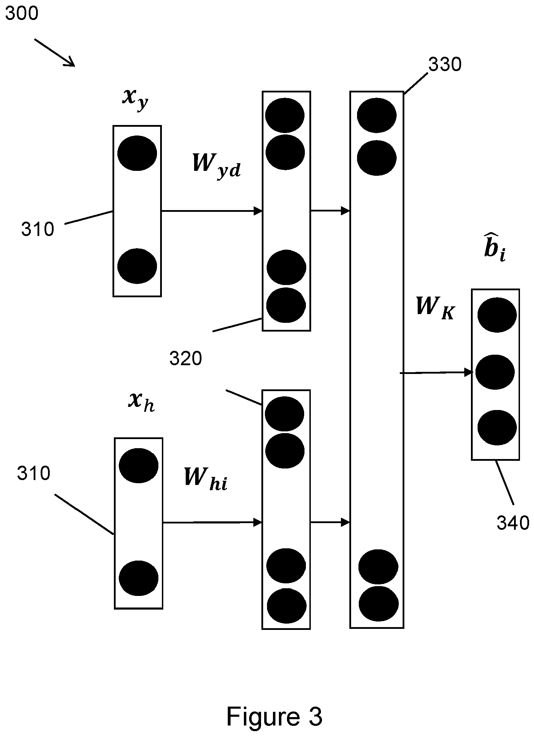

Figure 3 is a schematic diagram showing a neural network 300, according to an example. The neural network 300 may be implemented on the denoising module 220 shown in Figure 2 to implement the inference model. The neural network 300 comprises input layers 310. The inputs $\boldsymbol{x}_y$ and $\boldsymbol{x}_h$ to input layers 310 correspond to the real and imaginary parts of the demodulated received signal and channel estimation matrices as previously specified.

Each of the input layers 310 are followed by at least one separate hidden layer 320, denoted $\boldsymbol{L}_y$ and $\boldsymbol{L}_h$. The separate hidden layers 320 are followed by at least one joint or common hidden layer 330, $\boldsymbol{L}_{yd}$. The last common hidden layer is followed by one output layer 340. In examples, the sets of inputs may be filtered or processed at different rates.

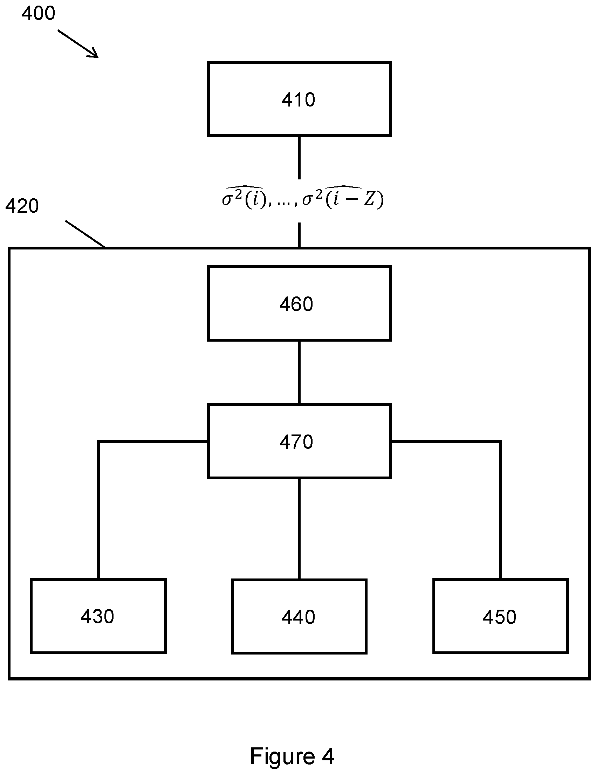

Figure 4 is a schematic diagram 400 showing logic for determining a signal to noise (SNR) regime, according to an example. Figure 4 shows a channel estimator 410 and denoising module 420 similar to the channel estimators 110 and 210 and denoising modules 120 and 220 shown in Figures 1 and 2.

The SNR regimes which determine three different implementations within denoising module 410 are low, medium and high and are depicted in Figure 4 by blocks 430, 440, 450. The blocks 430, 440, 450 may be implemented in the denoising module 420 in software, hardware or a combination of both software and hardware. The noise variance estimates $\widehat{\sigma^2(i)}, \dots, \widehat{\sigma^2(i-Z)}$ across Z symbols are input to a combination function 460. The combination function 460 outputs an aggregated noise variance estimate that may activate one of the three blocks 430, 440, 450. The aggregated noise variance estimate may be, for example, an average noise variance across the symbols.

In Figure 4 the logical block 470 implements a noise classification function that computes the comparison of the aggregated noise variance output by the combination function 460 with a threshold. In some cases, thresholds for determining the low, medium and high ranges may be implementation specific. As an example, a low range may refer to a noise dominant SNR regime in which the SNR is less than zero decibels, while a high range may refer to a signal dominant regime in which the SNR is greater than 15 decibels.

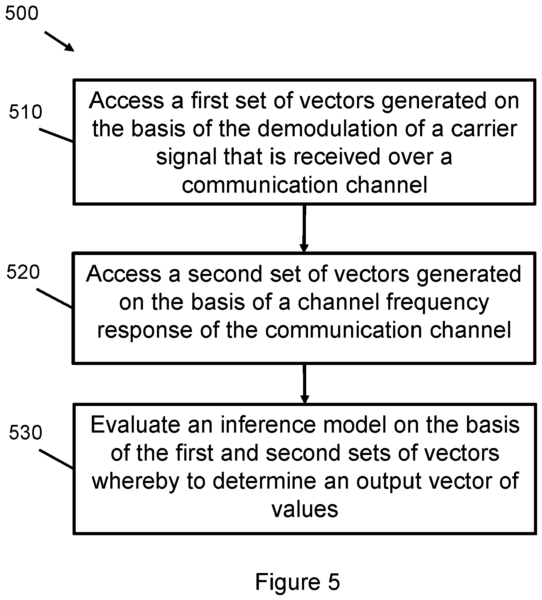

Figure 5 is a flow diagram showing a method 500 for receiving data over a communication channel, according to an example. The method 500 may be implemented on the apparatus described herein. In particular the method 500 may be implemented by the denoising modules 120, 220, 420.

At block 510, the method 500 comprises accessing a first set of vectors of values. In examples each vector of the first set is generated on the basis of the demodulation of a carrier signal that is received over a communication channel into a plurality of sub-carrier signals over a contiguous time period. For example, the carrier signal may be an Orthogonal Frequency Division Multiplexing (OFDM) signal as previously described.

At block 520, a second set of vectors of values is accessed. Each vector in the second set is generated on the basis of a channel frequency response of the communication channel over the contiguous time period. According to example, the second set of vectors may comprise the vectors $\boldsymbol{x}_h$ derived from channel estimation matrices $\hat{H}(j), j = i - Z + 1 : i$ previously described.

At block 530, an inference model is evaluated on the basis of the first and second sets of vectors whereby to determine an output vector of values. Each value of the output vector estimates a data value transmitted by the carrier signal over the contiguous time period.

The method 500 shown in Figure 5 may be used in conjunction with the other methods and systems described herein to apply the functions $f_i$ in the expression (4).

According to examples described herein, the method 500 may comprise obtaining a noise variance estimate and selecting the inference model from a set of one of more inference models on the basis of the noise variance estimate.

This may be implemented on the denoising module 420 shown in Figure 4. According to examples described herein models may be trained separately for each noise regime.

The method 500 may also comprise the steps of accessing a target vector of values comprising data values transmitted by the carrier signal over the contiguous time period and modifying the inference model on the basis of the output vector and the target vector. In some cases, such a target vector may be obtained from a training data set.

In some cases, modifying the inference model comprises determining an error between the output vector and the target vector and modifying one or more parameters of the inference model to minimise the error between the output vector and the target vector.

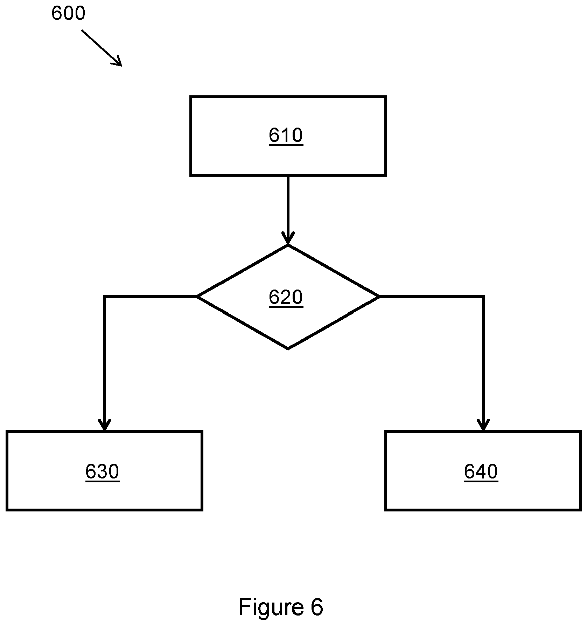

Figure 6 is a flow diagram showing a method 600 for determining the interference condition of a communication channel according to an example. The method 600 may be implemented in conjunction with the method 500 shown in Figure 5 and on the apparatus 100, 200 and 400.

At block 610, a trigger is received. The trigger may indicate whether co-channel interference is present or whether self-interference is present. According to examples, the trigger may be generated locally or in the network. If the trigger is generated locally, a classifier may be trained remotely or locally. In examples, the classifier receives OFDM symbols with a high pilot density to identify the interference signature. In one implementation, the input may consist of full-pilot OFDM symbols. If the trigger is signalled by the network the trigger may be communicated according to a standard format in the data carrier signal.

At block 620, a determination is made whether the interference is co-channel interference or self-interference on the basis of the trigger. At block 630, if co-channel interference is detected, the inference model for determining the function $f_1$ is activated. At block 640, if self-interference is detected, the inference model for determining the function $f_2$ is activated.

According to an example, a co-channel interference trigger may be based on signalling from the network to indicate that co-channel interference has been detected or is expected. The trigger signalling received from the network may be implicit or explicit. For an implicit trigger, signalling associated with existing supporting interference mitigation mechanisms may be used, i.e. signalling defined for Inter Cell Interference Coordination (ICIC), further/enhanced ICIC (feICIC) or UE-UE Cross Link Interference (CLI) mitigation.

An explicit trigger may be implemented at the Radio Resource Control (RRC) sub-layer using new or piggy-backed on existing RRC information elements or in the MAC sub-layer using new or piggy-backed control elements. Additionally the serving network may be informed of the device capability to receive and use the explicit trigger.

In the case of a self-interference trigger, the geographical area of the UE is characterized by longer delays relative to the control plane that the network allocated to the UE. The network may acquire this information by corroborating the UE position estimate with long delays information signalled by near-by UEs experiencing self-interference conditions.

It should be appreciated that one or more steps of the embodiment methods provided herein may be performed by corresponding units or modules. The respective units or modules may be hardware, software, or a combination thereof. For instance, one or more of the units or modules may be an integrated circuit, such as field programmable gate arrays (FPGAs) or application-specific integrated circuits (ASICs).

Although the present disclosure and its advantages have been described in detail, it should be understood that various changes, substitutions and alterations can be made herein without departing from the scope of the disclosure as defined by the appended claims.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning of the claims are to be embraced within their scope.

## Claims

1. A method for receiving data over a communication channel, the method comprising:

   accessing (510) a first set of vectors of values, wherein each vector of the first set is generated on the basis of the demodulation of a carrier signal into a plurality of sub-carrier signals, the carrier signal having been received over a communication channel over a contiguous time period;
   accessing (520) a second set of vectors of values, wherein each vector in the second set is generated on the basis of a channel frequency response of the communication channel over the contiguous time period; and
   evaluating (530) an inference model based on machine learning techniques on the basis of the first and second sets of vectors whereby to determine an output vector of values, each value of the output vector estimating a data value transmitted by the carrier signal over the contiguous time period,
   **characterised in that** the method further comprises:

determining an interference condition of the communication channel, wherein the interference condition comprises one of self-interference and co-channel interference; and

selecting the inference model from a set of inference models on the basis of the interference condition.

2. The method of claim 1, wherein the carrier signal is an Orthogonal Frequency Division Multiplexing, OFDM, signal.

3. The method of claim 1, comprising:
obtaining a noise variance estimate; and further selecting the inference model from the set of inference models on the basis of the noise variance estimate.

4. The method of claim I, wherein determining the interference condition of the communication channel comprises receiving a value indicative of an interference condition from a transmitter.

5. The method of claim 1, wherein determining the interference condition of the communication channel comprises performing classification of values received in the carrier signal to infer the interference condition of the communication channel.

6. The method of claim 1, wherein the inference model is a linear predictive function, a non-linear predictive function, a recursive neural network, an autoencoder, an adversarial neural network, a gradient boosting machine, a random forest, a support vector machine, a nearest neighbour model, a Gaussian process, a Bayesian regression and/or an ensemble of one or more of these.

7. The method of claim 1, comprising:

accessing a target vector of values comprising data values transmitted by the carrier signal over the contiguous time period; and
modifying the inference model on the basis of the output vector and the target vector.

8. The method of claim 7, wherein modifying the inference model comprises:

determining an error between the output vector and the target vector; and
modifying one or more parameters of the inference model to minimise the error between the output vector and the target vector.

9. An apparatus for receiving data over a communication channel, the apparatus comprising:

a demodulator arranged to generate a first set of vectors of values on the basis of the demodulation of a carrier signal into a plurality of sub-carrier signals, the carrier signal having been received over a contiguous time period;
a channel estimator (210) communicatively coupled to the demodulator, the channel estimator arranged to generate a second set of vectors of values on the basis of a channel frequency response of the communication channel over the contiguous time period; and
a denoising module (220) communicatively coupled to the demodulator and channel estimator (210), the denoising module (220) arranged to access the first and second sets of vectors of values and evaluate an inference model based on machine learning techniques on the basis of the first and second sets of vectors whereby to determine an output vector of values, each value of the output vector estimating a data value transmitted by the carrier signal over the contiguous time period,
**characterised in that** the denoising module (220) is arranged to:
determine an interference condition of the communication channel, wherein the interference condition comprises one of self-interference and co-channel interference; and
select the inference model from a set of inference models on the basis of the interference condition.

10. The apparatus of claim 9, wherein the denoising module is arranged to:
obtain a noise variance estimate; and further select the inference model from the set of inference models on the basis of the noise variance estimate.

11. The apparatus of claim 9, further comprising a training module arranged to:

access the first and second set of vectors of values and the inference model;

accessing a target vector of values comprising data values transmitted by the carrier signal over the contiguous time period; and

modify the inference model on the basis of the output vector and the target vector.

**12.** The apparatus of claim 11, wherein to modify the inference model, the training module is arranged to:

determine an error between the output vector and the target vector; and
modify one or more parameters of the inference model to minimise the error between the output vector and the target vector.

**13.** A non-transitory computer readable storage comprising program code that, when executed by a processor, causes the processor to perform the method according to any one of claims I to 8.

**Patentansprüche**

**1.** Verfahren zum Empfangen von Daten über einen Kommunikationskanal, wobei das Verfahren Folgendes umfasst:

Zugreifen (510) auf einen ersten Satz von Vektoren von Werten, wobei jeder Vektor des ersten Satzes auf Basis der Demodulation eines Trägersignals in eine Vielzahl von Unterträgersignalen erzeugt wird, wobei das Trägersignal über einen Kommunikationskanal in einer zusammenhängenden Zeitperiode empfangen wurde;
Zugreifen (520) auf einen zweiten Satz von Vektoren von Werten, wobei jeder Vektor im zweiten Satz auf Basis eines Kanalfrequenzgangs des Kommunikationskanals über die zusammenhängende Zeitperiode erzeugt wird; und
Beurteilen (530) eines Inferenzmodells auf Basis von Maschinenlerntechniken auf Basis des ersten und des zweiten Satzes von Vektoren, wodurch ein Ausgabevektor von Werten bestimmt wird, wobei jeder Wert des Ausgabevektors einen Datenwert schätzt, der vom Trägersignal über die zusammenhängende Zeitperiode übertragen wird,
**dadurch gekennzeichnet, dass** das Verfahren ferner Folgendes umfasst:

Bestimmen eines Interferenzzustands des Kommunikationskanals, wobei der Interferenzzustand eines von Selbstinterferenz und Gleichkanalinterferenz umfasst; und
Auswählen des Inferenzmodells aus einem Satz von Inferenzmodellen auf Basis des Interferenzzustands.

**2.** Verfahren nach Anspruch 1, wobei das Trägersignal ein orthogonales Frequenzmultiplexing(OFDM)-Signal ist.

**3.** Verfahren nach Anspruch 1, das Folgendes umfasst:

Erhalten einer Rauschvarianzschätzung; und
weiteres Auswählen des Inferenzmodells aus dem Satz von Inferenzmodellen auf Basis der Rauschvarianzschätzung.

**4.** Verfahren nach Anspruch 1, wobei das Bestimmen des Interferenzzustands des Kommunikationskanals das Empfangen eines Wertes, der einen Interferenzzustand anzeigt, von einem Sender umfasst.

**5.** Verfahren nach Anspruch 1, wobei das Bestimmen des Interferenzzustands des Kommunikationskanals das Durchführen einer Klassifizierung von Werten umfasst, die im Trägersignal empfangen werden, um den Interferenzzustand des Kommunikationskanals abzuleiten.

**6.** Verfahren nach Anspruch 1, wobei das Inferenzmodell eine lineare Vorhersagefunktion, eine nichtlineare Vorhersagefunktion, ein rekursives neuronales Netzwerk, ein Autocodierer, ein feindliches neuronales Netzwerk, eine Gradientenboostingmaschine, ein Zufallswald, eine Support Vector Machine, ein nächstes Nachbarmodell, ein Gauß'scher Prozess, eine Bayes'sche Regression und/oder eine Gruppe von einem oder mehreren von diesen ist.

**7.** Verfahren nach Anspruch 1, das Folgendes umfasst:

Zugreifen auf einen Zielvektor von Werten, die Datenwerte umfassen, die vom Trägersignal über die zusammenhängende Zeitperiode übertragen werden; und

Modifizieren des Inferenzmodells auf Basis des Ausgabevektors und des Zielvektors.

8. Verfahren nach Anspruch 7, wobei das Modifizieren des Inferenzmodells Folgendes umfasst:

Bestimmen eines Fehlers zwischen dem Ausgabevektor und dem Zielvektor; und
Modifizieren von einem oder mehreren Parametern des Inferenzmodells, um den Fehler zwischen dem Ausgabevektor und dem Zielvektor zu minimieren.

9. Vorrichtung zum Empfangen von Daten über einen Kommunikationskanal, wobei die Vorrichtung Folgendes umfasst:

einen Demodulator, der angeordnet ist, auf Basis der Demodulation des Trägersignals zu einer Vielzahl von Unterträgersignalen einen ersten Satz von Vektoren von Werten zu erzeugen, wobei das Trägersignal in einer zusammenhängenden Zeitperiode empfangen wurde;
einen Kanalschätzer (210), der kommunikativ an den Demodulator gekoppelt ist, wobei der Kanalschätzer angeordnet ist, auf Basis eines Kanalfrequenzgangs des Kommunikationskanals einen zweiten Satz von Vektoren von Werten über die zusammenhängende Zeitperiode zu erzeugen; und
ein Entrauschungsmodul (220), das kommunikativ an den Demodulator und den Kanalschätzer (210) gekoppelt ist, wobei das Entrauschungsmodul (220) angeordnet ist, auf den ersten und den zweiten Satz von Vektoren von Werten zuzugreifen und ein Inferenzmodell auf Basis von Maschinenlerntechniken auf Basis des ersten und des zweiten Satzes von Vektoren zu beurteilen, wodurch ein Ausgabevektor von Werten bestimmt wird, wobei jeder Wert des Ausgabevektors einen Datenwert schätzt, der vom Trägersignal über die zusammenhängende Zeitperiode übertragen wird,
**dadurch gekennzeichnet, dass** das Entrauschungsmodul (220) zu Folgendem angeordnet ist:

Bestimmen eines Interferenzzustands des Kommunikationskanals, wobei der Interferenzzustand eines von Selbstinterferenz und Gleichkanalinterferenz umfasst; und
Auswählen des Inferenzmodells aus einem Satz von Inferenzmodellen auf Basis des Interferenzzustands.

10. Vorrichtung nach Anspruch 9, wobei das Entrauschungsmodul zu Folgendem angeordnet ist:

Erhalten einer Rauschvarianzschätzung; und
weiteres Auswählen des Inferenzmodells aus dem Satz von Inferenzmodellen auf Basis der Rauschvarianzschätzung.

11. Vorrichtung nach Anspruch 9, die ferner ein Trainingsmodul umfasst, das zu Folgendem angeordnet ist:

Zugreifen auf den ersten und den zweiten Satz von Vektoren von Werten und auf das Inferenzmodell;
Zugreifen auf einen Zielvektor von Werten, die Datenwerte umfassen, die vom Trägersignal über die zusammenhängende Zeitperiode übertragen werden; und
Modifizieren des Inferenzmodells auf Basis des Ausgabevektors und des Zielvektors.

12. Vorrichtung nach Anspruch 11, wobei das Trainingsmodul zum Modifizieren des Inferenzmodells zu Folgendem angeordnet ist:

Bestimmen eines Fehlers zwischen dem Ausgabevektor und dem Zielvektor; und
Modifizieren von einem oder mehreren Parametern des Inferenzmodells, um den Fehler zwischen dem Ausgabevektor und dem Zielvektor zu minimieren.

13. Nichttransitorischer computerlesbarer Speicher, der einen Programmcode umfasst, der, wenn er von einem Prozessor ausgeführt wird, den Prozessor veranlasst, das Verfahren nach einem der Ansprüche 1 bis 8 durchzuführen.

**Revendications**

1. Procédé pour recevoir des données sur un canal de communication, le procédé comprenant :

l'accès (510) à un premier ensemble de vecteurs de valeurs, dans lequel chaque vecteur du premier ensemble est généré sur la base de la démodulation d'un signal de porteuse d'une pluralité de signaux de sous-porteuses, le signal de porteuse ayant été reçu sur un canal de communication sur une période de temps contiguë ;

l'accès (520) à un deuxième ensemble de vecteurs de valeurs, dans lequel chaque vecteur du deuxième ensemble est généré sur la base d'une réponse de fréquence de canal du canal de communication sur la période de temps contiguë ; et

l'évaluation (530) d'un modèle d'inférence en fonction de techniques d'apprentissage machine sur la base des premier et deuxième ensembles de vecteurs, afin de déterminer un vecteur de sortie de valeurs, chaque valeur du vecteur de sortie estimant une valeur de données transmise par le signal de porteuse sur la période de temps contiguë,

**caractérisé en ce que** le procédé comprend en outre :

la détermination d'un état de brouillage du canal de communication, dans lequel l'état de brouillage comprend un parmi un auto-brouillage et un brouillage dans le même canal ; et

la sélection du modèle d'inférence dans un ensemble de modèles d'inférence en fonction de l'état de brouillage.

2. Procédé de la revendication 1, dans lequel le signal de porteuse est un signal de multiplexage par répartition en fréquences orthogonales, OFDM.

3. Procédé de la revendication 1, comprenant :

l'obtention d'une estimation de variance de bruit ; et

la sélection supplémentaire du modèle d'inférence dans l'ensemble de modèles d'inférence en fonction de l'estimation de variance de bruit.

4. Procédé de la revendication 1, dans lequel la détermination de l'état de brouillage du canal de communication comprend la réception, d'un émetteur, d'une valeur indicative d'un état de brouillage.

5. Procédé de la revendication 1, dans lequel la détermination de l'état de brouillage du canal de communication comprend la réalisation d'une classification de valeurs reçues dans le signal de porteuse pour déduire l'état de brouillage du canal de communication.

6. Procédé de la revendication 1, dans lequel le modèle d'inférence est une fonction prédictive linéaire, une fonction prédictive non linéaire, un réseau neuronal récursif, un auto-encodeur, un réseau neuronal antagoniste, une machine à renforcement de gradient, une forêt aléatoire, une machine à vecteurs de support, un modèle du plus proche voisin, un processus gaussien, une régression bayésienne et/ou un ensemble d'un ou plusieurs de ces derniers.

7. Procédé de la revendication 1, comprenant :

l'accès à un vecteur cible de valeurs comprenant des valeurs de données transmises par le signal de porteuse sur la période de temps contiguë ; et

la modification du modèle d'inférence en fonction du vecteur de sortie et du vecteur cible.

8. Procédé de la revendication 7, dans lequel la modification du modèle d'inférence comprend :

la détermination d'une erreur entre le vecteur de sortie et le vecteur cible ; et

la modification d'un ou plusieurs paramètres du modèle d'inférence afin de minimiser l'erreur entre le vecteur de sortie et le vecteur cible.

9. Appareil pour recevoir des données sur un canal de communication, l'appareil comprenant :

un démodulateur conçu pour générer un premier ensemble de vecteurs de valeurs sur la base de la démodulation d'un signal de porteuse d'une pluralité de signaux de sous-porteuse, le signal de porteuse ayant été reçu sur une période de temps contiguë ;

un estimateur de canal (210) couplé de manière communicative au démodulateur, l'estimateur de canal étant conçu pour générer un deuxième ensemble de vecteurs de valeurs sur la base d'une réponse de fréquence de canal du canal de communication sur la période de temps contiguë ; et

un module de débruitage (220) couplé de manière communicative au démodulateur et à l'estimateur de canal (210), le module de débruitage (220) étant conçu pour accéder aux premier et deuxième ensembles de vecteurs de valeurs et évaluer un modèle d'inférence en fonction de techniques d'apprentissage machine sur la base des premier et deuxième ensembles de vecteurs, afin de déterminer un vecteur de sortie de valeurs, chaque valeur du vecteur de sortie estimant une valeur de données transmise par le signal de porteuse sur la période de temps contiguë,

**caractérisé en ce que** le module de débruitage (220) est conçu pour :

déterminer un état de brouillage du canal de communication, dans lequel l'état de brouillage comprend un parmi un auto-brouillage et un brouillage dans le même canal ; et
sélectionner le modèle d'inférence dans un ensemble de modèles d'inférence en fonction de l'état de brouillage.

**10.** Appareil de la revendication 9, dans lequel le module de débruitage est conçu pour :

obtenir une estimation de variance de bruit ; et
sélectionner en plus le modèle d'inférence dans l'ensemble de modèles d'inférence en fonction de l'estimation de variance de bruit.

**11.** Appareil de la revendication 9, comprenant en outre un module d'entraînement conçu pour :

accéder aux premier et deuxième ensembles de vecteurs de valeurs et au modèle d'inférence ;
accéder à un vecteur cible de valeurs comprenant des valeurs de données transmises par le signal de porteuse sur la période de temps contiguë ; et
modifier le modèle d'inférence en fonction du vecteur de sortie et du vecteur cible.

**12.** Appareil de la revendication 11, dans lequel, pour modifier le modèle d'inférence, le module d'entraînement est conçu pour :

déterminer une erreur entre le vecteur de sortie et le vecteur cible ; et
modifier un ou plusieurs paramètres du modèle d'inférence afin de minimiser l'erreur entre le vecteur de sortie et le vecteur cible.

**13.** Stockage non transitoire lisible par ordinateur comprenant un code de programme qui, lorsqu'il est exécuté par un processeur, amène le processeur à réaliser le procédé selon l'une quelconque des revendications 1 à 8.

Figure 1

Figure 2

Figure 3

400

410

420

$$\widehat{\sigma^2(i)}, ..., \widehat{\sigma^2(i-Z)}$$

460

470

430

440

450

Figure 4

500

| | |
|---|---|
| 510 | Access a first set of vectors generated on the basis of the demodulation of a carrier signal that is received over a communication channel |

| | |
|---|---|
| 520 | Access a second set of vectors generated on the basis of a channel frequency response of the communication channel |

| | |
|---|---|
| 530 | Evaluate an inference model on the basis of the first and second sets of vectors whereby to determine an output vector of values |

Figure 5

600

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109246038 A

**Non-patent literature cited in the description**

- **TAOTAO WANG et al.** Deep Learning for Joint MIMO Detection and Channel Decoding. Cornell University Library, 201 Olin Library Cornell University, 17 January 2019